# EUROPÄISCHE PATENTANMELDUNG

(11) **EP 4 644 325 A1**
(43) Veröffentlichungstag der Anmeldung: **05.11.2025**
(21) Anmeldenummer: 24173095.1
(22) Anmeldetag: 29.04.2024
(51) Int. Cl.: C01C 3/10

(54) **EFFIZIENTES VERFAHREN ZUM FEUCHTBRIKETTIEREN VON NATRIUMCYANID**

(71) Anmelder: EPC Engineering & Technologies GmbH, 99310 Arnstadt (DE)
(72) Erfinder:
(74) Vertreter: Meissner Bolte Partnerschaft mbB

(57) **Zusammenfassung**

Die Erfindung betrifft ein Verfahren zur Herstellung von Natriumcyanid-Briketts, umfassend i) Bereitstellen einer Natriumcyanid-Kristalle enthaltenden wässrigen Suspension, ii) Abtrennen der Natriumcyanid-Kristalle aus der Suspension mittels diskontinuierlich arbeitender Zentrifuge als feuchte Masse, iii) Zwischenlagern der abgetrennten feuchten Masse in einem Pufferbehälter und iv) Zuführen der abgetrennten feuchten Masse aus dem Pufferbehälter in eine kontinuierlich arbeitende Brikettiermaschine, in der die feuchte Masse zu den Natriumcyanid-Briketts verpresst wird.

Die Erfindung betrifft ferner eine Vorrichtung zur Herstellung von Natriumcyanid-Briketts nach dem erfindungsgemäßen Verfahren.

## Beschreibung

Die vorliegende Erfindung betrifft ein Verfahren zur Herstellung von Natriumcyanid-Briketts und eine Vorrichtung zur Durchführung dieses Verfahrens.

Alkalimetallcyanide haben zahlreiche Anwendungen. Ein besonderes wichtiges Anwendungsgebiet ist der Einsatz zur Gewinnung von Gold, Silber und anderen Metallen in der Cyanidlaugerei. Andere Anwendungsgebiete sind die Galvanotechnik sowie das Härten von Stahl. Auch als Ausgangsstoff in der chemischen Synthese finden Alkalimetallcyanide zahlreiche Anwendungen. Ein Beispiel ist hier der Einsatz zur Synthese von Nitrilen, die vielfältige Anwendung in der chemischen Industrie findet. Ein technisch besonders wichtiges Alkalimetallcyanid ist das Natriumcyanid.

Typischerweise werden Metallcyanide in Form von Briketts verwendet, da dadurch die Entstehung von gesundheitsschädlichem Metallcyanid-haltigem Staub vermieden wird, wodurch die Nutzung der Metallcyanide vereinfacht wird.

Alkali- und Erdalkalimetallcyanide werden seit längerem durch die Neutralisation von Cyanwasserstoff (HCN), auch als Blausäure bezeichnet, hergestellt. Der Cyanwasserstoff wird hochkonzentriert flüssig oder gasförmig (z.B. > 99 Ma.% HCN) oder verdünnt gasförmig (z.B. 6-8 Ma.% HCN) eingesetzt, je nach deren Herstellungsverfahren. In jedem Fall entsteht eine Cyanidlösung, in welcher die Metallcyanide noch gelöst sind.

Durch Aufkonzentrierung der Cyanidlösung, üblicherweise in einem kontinuierlich oder diskontinuierlich betriebenem Kristallisator unter Vakuum, entsteht eine Metallcyanidsuspension, in welcher sich Metallcyanidkristalle bilden.

Die Kristalle werden durch unterschiedliche Fest-Flüssig-Abtrennvorrichtungen, wie z.B. Zentrifugen oder Trommelfilter, aus der Suspension entfernt. Die dabei entstehende Mutterlauge (im Wesentlichen ohne Kristalle) wird üblicherweise wieder in den Prozess zurückgeführt und wiederverwendet.

Die abgetrennten Kristalle werden als feuchte Masse erhalten, die noch erhebliche Anteile an Wasser enthält. Die feuchte Masse wird dann in ein dampf- oder auch gasbeheiztes Trocknungssystem gegeben und auf eine Restfeuchte von 0,1 - 0,5 Massen-% Wasser getrocknet.

Anschließend wird das getrocknete Metallcyanidpulver in Brikettiermaschinen oder Tablettenpressen zu Briketts, z.B. in Tablettenform, geformt und anschließend verpackt.

Ein großes Problem bei den bisherigen, im Stand der Technik bekannten Verfahren zur Herstellung von Natriumcyanid-Briketts ist der hohe Energieverbrauch. Üblicherweise werden in einem solchen Verfahren z.B. 250 bis 500 kg Heizdampf pro Tonne HCN, sowie 30 bis 70 kW Elektroenergie pro Tonne HCN verbraucht. Der hohe Energieverbrauch ist meist notwendig, damit aus der feuchten Masse ausreichend stabile Briketts geformt werden können, die hinsichtlich Festigkeit und chemischer Beständigkeit den marktüblichen Anforderungen entsprechen. Für die Trocknung sind meist kosten- und wartungsintensive Apparaturen notwendig. Zudem birgt die Installation der Trocknungsapparaturen meist erhöhte Kosten, sowie spezifische Gebäudeanforderungen, die auch mit erhöhten Kosten für den Anwender verbunden sind. Darüber hinaus sind mit der im Trocknungsprozess entstehenden Abluft meist aufwendige Aufbereitungsprozesse bezüglich Umweltbedingungen verbunden.

Vor diesem Hintergrund lag der vorliegenden Erfindung die Aufgabe zugrunde, ein Verfahren zur Herstellung von Natriumcyanid-Briketts bereitzustellen, das die oben geschilderten Nachteile vermeidet.

Insbesondere lag der vorliegenden Erfindung die Aufgabe zugrunde, ein Verfahren zur Herstellung von Natriumcyanid-Briketts bereitzustellen, in dem der Energieverbrauch minimiert wird. Die Nutzung von kosten- und wartungsintensive Apparaturen zur Trocknung und die damit verbundenen erhöhten Gebäudeanforderungen und Installationskosten und die Aufbereitung der beim Trocknen entstandenen Abluft soll dabei möglichst vermieden werden. Ferner sollen zugleich die durch das Verfahren erhältlichen Briketts eine gute Festigkeit und chemischer Beständigkeit aufweisen, die den marktüblichen Anforderungen entsprechen.

Es hat sich gezeigt, dass dies durch Einsatz einer diskontinuierlich arbeitenden Zentrifuge zur Abtrennung der Natriumcyanid-Kristalle in Verbindung mit einer kontinuierlich arbeitenden Brikettiermaschine erreicht wurde, wobei die abgetrennten Natriumcyanid-Kristalle in einem Pufferbehälter zwischengelagert werden, bevor sie der Brikettiermaschine zugeführt werden.

Die Erfindung betrifft daher ein Verfahren zur Herstellung von Natriumcyanid-Briketts, welches folgende Schritte umfasst
i) Bereitstellen einer Natriumcyanid-Kristalle enthaltenden wässrigen Suspension,
ii) Abtrennen der Natriumcyanid-Kristalle aus der Suspension mittels einer diskontinuierlich arbeitenden Zentrifuge als feuchte Masse,
iii) Zwischenlagern der abgetrennten feuchten Masse in einem Pufferbehälter und
iv) Zuführen der abgetrennten feuchten Masse aus dem Pufferbehälter in eine kontinuierlich arbeitende Brikettiermaschine, in der die feuchte Masse zu den Natriumcyanid- Briketts verpresst wird.

Durch das Abtrennen der feuchten Masse, enthaltend Natriumcyanid-Kristalle, aus der Natriumcyanid-Kristalle enthaltenden wässrigen Suspension mittels diskontinuierlich arbeitender Zentrifuge weist die abgetrennte feuchte Masse einen ausreichend geringen Feuchtegehalt auf, so dass die feuchte Masse nach Zwischenlagerung in einem Pufferbehälter in der kontinuierlich arbeitenden Brikettiermaschine, bevorzugt einer kontinuierlich arbeitenden Walzenpresse, zu Natriumcyanid-Briketts verpresst werden kann, die eine gute Festigkeit und chemische Beständigkeit aufweisen und den marktüblichen Anforderungen entsprechen. Eine Trocknung vor der Verpressung kann ersatzlos entfallen.

Durch das erfindungsgemäße Verfahren können folgende Einsparpotenziale generiert werden:
(i) Ein Trocknungsschritt mit zahlreichen großen und kosten- und wartungsintensiven Ausrüstungen entfällt.
(ii) Eine Aufbereitung der im Trocknungsprozess entstehenden Abluft entfällt.
(iii) Die Gebäude- und Installationskosten reduzieren sich.
(iv) Die Betriebskosten für Elektroenergie und Heizdampf oder Heizgas reduzieren sich.

Die Erfindung wird im Folgendem im Einzelnen erläutert.

Das erfindungsgemäße Verfahren umfasst den Schritt i) des Bereitstellens einer Natriumcyanid-Kristalle enthaltenden wässrigen Suspension.

Das Bereitstellen einer Natriumcyanid-Kristalle enthaltenden wässrigen Suspension umfasst typischerweise einen Absorptionsschritt und einen Kristallisationsschritt, insbesondere
ia) einen Absorptionsschritt in Form einer Absorption von Cyanwasserstoff in eine wässrige Natriumhydroxidlösung unter Bildung einer wässrigen Natriumcyanidlösung und
ib) einen Kristallisationsschritt in Form des Einbringens der wässrigen Natriumcyanidlösung in einen evaporativen Kristallisator, der beheizt wird und in dem ein Unterdruck vorliegt.

Der Cyanwasserstoff wird dabei bevorzugt in Form von flüssigem Cyanwasserstoff, gasförmigem Cyanwasserstoff oder einem Cyanwasserstoff enthaltenden Gas in der wässrigen Natriumhydroxidlösung absorbiert.

Bei dem flüssigen oder gasförmigen Cyanwasserstoff kann es sich um hochkonzentrierten Cyanwasserstoff handeln. Beispielsweise kann der flüssige oder gasförmige Cyanwasserstoff einen Cyanwasserstoffgehalt von mehr als 95 Massen-%, bevorzugt mehr als 99 Massen-%, aufweisen. Der flüssige oder gasförmige Cyanwasserstoff kann z.B. nach einem üblichen Syntheseverfahren, z.B. dem Andrussow-Verfahren, hergestellt sein oder ein Abfallprodukt aus Vorprozessen sein.

Das Cyanwasserstoff enthaltenden Gas kann ein Cyanwasserstoff enthaltendes Synthesegas sein, insbesondere ein cyanwasserstoffhaltiges Synthesegas aus dem Andrussow-Prozess. Der Anteil an Cyanwasserstoff in dem Cyanwasserstoff enthaltenden Gas kann in weiten Bereichen variieren und z.B. im Bereich von 4 bis 20 Massen-%, bevorzugt 6 bis 8 Massen-%, liegen.

Zur industriellen Herstellung von HCN als Ausgangssubstanz für die Synthese von Alkalimetallcyaniden sind eine Reihe von Verfahren bekannt. Ein häufig eingesetztes Verfahren ist das sogenannte Andrussow-Verfahren. Beim Andrussow-Verfahren erfolgt die Herstellung von HCN durch katalysierte Reaktion von Methan, Ammoniak und Luftsauerstoff. Typischerweise wird dabei ein Gemisch von Ammoniak und Methan an Platin-Netzen unter Einblasen von Sauerstoff bei hohen Temperaturen zur Reaktion gebracht. Das durch das Andrussow-Verfahren hergestellte unmittelbare Syntheseprodukt stellt dabei eine Mischung von mehreren Komponenten dar, wobei neben dem erwünschten Reaktionsprodukt HCN insbesondere unreagierter Ammoniak, Wasserstoff, Stickstoff und Kohlenoxide vorliegen. Typischerweise wird so vorgegangen, dass das HCN-haltige Synthesegas nach der Reaktion durch Abkühlen verflüssigt und anschließend die Blausäure aufgereinigt wird.

Die Blausäure oder das cyanwasserstoffhaltige Synthesegas aus dem Andrussow-Prozess können mit Vorteil als Cyanwasserstoff (Ausgangsmaterial) im erfindungsgemäßen Verfahren eingesetzt werden.

Das Bereitstellen einer Natriumcyanid-Kristalle enthaltenden wässrigen Suspension umfasst ferner typischerweise einen Kristallisationsschritt in Form des Einbringens der hergestellten wässrigen Natriumcyanidlösung in einem evaporativen Kristallisator, der beheizt wird und in dem ein Unterdruck vorliegt. Der evaporative Kristallisator ist ein Kristallisator, bei dem ein Teil des Lösungsmittels, hier Wasser, verdampft wird. Der evaporative Kristallisator kann kontinuierlich oder diskontinuierlich betrieben werden.

Der Kristallisationsschritt erfolgt bevorzugt in Form des Einbringens der wässrigen Natriumcyanidlösung, in einen evaporativen Kristallisator, der so beheizt wird, dass an der Kontaktfläche des Heizelementes zu der Natriumcyanidlösung eine Temperatur von etwa 60 - 100°C, vorzugsweise etwa 70 - 90°C vorliegt, und in dem ein Druck von etwa 30 - 100 mbar, vorzugsweise 30 - 70 mbar, vorliegt. Typischerweise findet die Beheizung des evaporativen Kristallisators durch Dampfbeheizung statt.

Grundsätzlich gilt dabei, dass durch steigende Temperatur während des Kristallisationsschrittes im evaporativem Kristallisator die Bildung von Nebenprodukten, insbesondere in Form von Natriumformiaten begünstigt wird. Unter diesem Gesichtspunkt sollte also möglichst kalt gearbeitet werden.

Problematisch ist hier jedoch, dass sich bei tiefen Temperaturen sehr kleine Natriumcyanidkristalle bilden, die eine Abtrennung im Abtrennschritt ii) erschweren können. Durch das Zusammenspiel der Beheizung im Kristallisationsschritt in der Art, dass an der Kontaktfläche des Heizelementes zu der Natriumcyanidlösung eine Temperatur von etwa 60 - 100°C, vorzugsweise etwa 70 - 90°C vorliegt mit einer Vakuumerzeugung im Kristallisationsschritt, sodass ein Druck von etwa 30 - 100 mbar, vorzugsweise 30 - 70 mbar vorliegt, gelingt es besonders gut, die Bildung von Nebenprodukten insbesondere in Form von Formiaten hinreichend zu unterdrücken und gleichzeitig gute Kristallgrößen zu erreichen.

Die Aufheizung der Kristallisationslösung erfolgt dabei typischerweise durch einen Rohrbündelwärmeaustauscher, der auf der Mantelseite mit Dampf beheizt ist. Dabei wird vorzugsweise Vakuumdampf eingesetzt, sodass Temperaturen von etwa 60 bis 100°C, typischerweise etwa 70 bis 90°C erreicht werden. Durch diese niedrigen Temperaturen kann die Bildung von Nebenprodukten, insbesondere in Form von Formiaten, weitgehend unterdrückt werden.

Durch das Zusammenspiel dieser Verfahrensparameter in Bezug auf die Beheizung mit der Vakuumerzeugung bei der ein Druck von etwa 30 bis 100 mbar, vorzugsweise etwa 30 bis 70 mbar vorliegt, werden auf der einen Seite hinreichende Kristallgrößen erreicht. Gewünscht ist eine Korngrößenverteilung mit Kristallgrößen d50 von etwa 50 bis 200 µm, insbesondere etwa 100 bis 120 µm. Dadurch wird ein nahezu vollständiges Abtrennen der auskristallisierten Natriumcyanid-Kristalle aus der entstandenen Suspension möglich.

Das erfindungsgemäße Verfahren umfasst ferner in Schritt ii) das Abtrennen der Natriumcyanid-Kristalle aus der Suspension mittels einer diskontinuierlich arbeitenden Zentrifuge als feuchte Masse. Die abgetrennte feuchte Masse enthält neben den abgetrennten Natriumcyanid-Kristallen Wasser, das als Feuchtigkeit verbleibt, sowie gegebenenfalls Verunreinigungen. Bei den Verunreinigungen kann es sich z.B. um Formiate, Carbonate oder unreagiertes Natriumhydroxid handeln. Die verbleibende Mutterlauge kann wiederverwertet werden, z.B. für die wässrige Natriumcyanidlösung.

Bevorzugt ist die diskontinuierlich arbeitende Zentrifuge eine Schälzentrifuge, weiter bevorzugt eine vertikale oder horizontale Schälzentrifuge.

Zur Einstellung eines geeigneten Feuchtegehalts der feuchten Masse wird die diskontinuierlich arbeitende Zentrifuge, insbesondere diskontinuierlich arbeitende Schälzentrifuge, bevorzugt mit einer Drehzahl von 10 bis 3000 Umdrehungen pro Minute, bevorzugt 10 bis 2000 Umdrehungen pro Minute, weiter bevorzugt 30 bis 1200 Umdrehungen pro Minute, betrieben.

Bevorzugt hat die Zentrifuge ein solches Fassungsvolumen, dass in einem Durchgang 100 kg bis 2000 kg, bevorzugt 200 kg bis 1500 kg, weiter bevorzugt 400 kg bis 900 kg, an feuchter Masse erhalten werden können.

Bevorzugt liegt der Feuchtegehalt der abgetrennten feuchten Masse bzw. der Feuchtegehalt der der Brikettiermaschine zugeführten feuchten Masse bei 1,0 bis 30 Massen-%, bevorzugt bei 1,0 bis 20 Massen-%, weiter bevorzugt bei 2,5 bis 12 Massen-%. Der Feuchtegehalt gibt den Wassergehalt bezogen auf das Gesamtgewicht der feuchten Masse an.

Das erfindungsgemäße Verfahren umfasst ferner in Schritt iii) die Zwischenlagerung der abgetrennten feuchten Masse in einem Pufferbehälter.

Insbesondere wird die feuchte Masse nach Abtrennung mittels der diskontinuierlich arbeitenden Zentrifuge nicht direkt der kontinuierlich arbeitenden Brikettiermaschine zugeführt, sondern in einem Pufferbehälter zwischengelagert, und von dort der Brikettiermaschine zugeführt, bevorzugt kontinuierlich.

Der Pufferbehälter dient insbesondere dazu, die mittels der Zentrifuge diskontinuierlich abgetrennte feuchte Masse mit dem der Brikettiermaschine zugeführten feuchten Masse-Strom, insbesondere kontinuierlichen feuchten Masse-Strom, zu vergleichmäßigen.

Der Pufferbehälter kann ein einfacher Vorratsbehälter, z.B. ein Tank, sein. Der Pufferbehälter weist zweckmäßigerweise ein ausreichendes Volumen auf, um eine Menge an feuchter Masse zwischenzulagern, die ein einfaches kontinuierliches Betreiben der Brikettiermaschine ermöglicht. Vorzugsweise ist der Pufferbehälter mit einem Mischorgan und einem Austragssystem, insbesondere einem kontinuierlichen Austragssystem, versehen.

Das Mischorgan in dem Pufferbehälter dient dazu, die Bildung von Brücken zwischen den Natriumcyanid-Kristallen in der feuchten Masse zu unterbinden, was zu einem Verklumpen der feuchten Masse führen könnte. Als Mischorgan eignen sich z.B. übliche Mischer oder Rühreinrichtungen. Die Brückenbildung in der feuchten Masse in dem Pufferbehälter soll vermieden werden, da die Brückenbildung die Zuführung des feuchten Masse-Stroms zur Brikettiermaschine unterbinden kann.

Das Austragsystem dient zum Austrag der feuchten Masse aus dem Pufferbehälter, die dann der Brikettiermaschine zugeführt wird.

Die abgetrennte feuchte Masse wird in Schritt iv) aus dem Pufferbehälter einer kontinuierlich arbeitenden Brikettiermaschine zugeführt und dort zu Natriumcyanid-Briketts verpresst. Insbesondere wird die von der Zentrifuge abgetrennte feuchte Masse, die in dem Pufferbehälter zwischengelagert wird, aus dem Pufferbehälter zur Brikettiermaschine transportiert. Die Verpressung der feuchten Masse bewirkt ein Abpressen von weiterer Feuchtigkeit bzw. Wasser, wodurch ein Teil der Feuchtigkeit entfernt wird, und ein Formen in die gewünschte Brikettform.

Bevorzugt ist die kontinuierlich arbeitende Brikettiermaschine eine kontinuierlich arbeitende Walzenpresse. Beispiele für Walzenpressen sind Doppelwalzenpressen und Ringwalzenpressen.

Bevorzugt ist die kontinuierlich arbeitende Brikettiermaschine eine Walzenpresse, die eine Zuführungsschnecke zur Vordruckerzeugung, Walzen, bevorzugt zwei Walzen, und eine Presskraftregelung aufweist. Vorzugsweise ist die Presskraftregelung hydraulisch. Bevorzugt wird der Pressdruck zwischen den zwei Walzen durch die Drehzahl der Zuführungsschnecke geregelt. Die Briketts fallen nach Durchgang zwischen den Walzen aufgrund des nachlassenden Pressdrucks heraus.

Die Walzen weisen auf der Oberfläche insbesondere eine Form auf, die auch als Matrizenform bezeichnet wird. Die Form bzw. Matrizenform dient dazu, die feuchte Masse in Brikettform zu verpressen. Die Matrizenform kann in Form einer Beschichtung oder als aufgeschraubte Segmente ausgestaltet sein. Die Matrizenform ist bevorzugt eine Edelstahlmatrize, d.h. eine Matrize aus Edelstahl.

Bevorzugt weisen die Walzen und/oder die auf der Oberfläche der Walze befindliche Matrizenform eine harte Oberfläche auf, z.B. eine Edelstahloberfläche. Gegenüber den häufig eingesetzten Walzen bzw. Matrizenformen mit elastischen Oberflächen, z.B. aus einer Gummierung, ist eine harte Oberfläche vorteilhaft, da damit ein gutes Abpressen von Feuchtigkeit und damit eine Verringerung des Wassergehalts ermöglicht wird.

Die Walzen der Brikettiermaschine bzw. der Walzenpresse sind bevorzugt Stahlwalzen oder Stahlgusswalzen. Besonders bevorzugt sind Stahlwalzen oder Stahlgusswalzen mit einer Edelstahlbeschichtung und/oder einer Edelstahlmatrize auf der Oberfläche.

In einer bevorzugten Ausführungsform weist die kontinuierlich arbeitende Brikettiermaschine bzw. Walzenpresse eine Zuführungsschnecke zur Vordruckerzeugung, Stahlwalzen oder Stahlgusswalzen mit einer Edelstahlbeschichtung und/oder einer Edelstahlmatrize auf der Oberfläche und eine hydraulische Presskraftregelung auf.

In einer bevorzugten Ausführungsform der Walzenpresse werden zwei Walzen gegenläufig betrieben. Die beiden Walzen sind auf ihrer Oberfläche bevorzugt mit einer Edelstahlbeschichtung und/oder einer Edelstahlmatrize versehen.

Die Brikettiermaschine kann insbesondere hinsichtlich Verdichtungskraft angepasst werden, um den Feuchtegehalt der geformten Natriumcyanid-Briketts einzustellen. Während der Brikettierung der feuchten Masse wird Wasser abgepresst. Das abgepresste Wasser enthält gelöstes Natriumcyanid und wird abgeführt und kann in den Kristallisator zurückgeführt werden.

Die feuchte Masse in der Brikettiermaschine wird bevorzugt bei einer Temperatur von 50 °C bis 100 °C, weiter bevorzugt von 50 °C bis 90 °C, insbesondere von 60 °C bis 80 °C, verpresst.

Die feuchte Masse in der Brikettiermaschine wird bevorzugt mit einem Pressdruck von 10000 kN/m² bis 50000 kN/m², insbesondere von 19000 kN/m² bis 23000 kN/m², verpresst.

Die entstandenen Natriumcyanid-Briketts können eine beliebige Form aufweisen. Mögliche Formen sind z.B. Briketts in Form von Tabletten oder kissenförmigen Formlingen ("Kissen").

Durch die Brikettierung der feuchten Masse, enthaltend Natriumcyanid-Kristalle, zu Natriumcyanid-Briketts in der erfindungsgemäß eingesetzten Brikettiermaschine wird der Feuchtegehalt der feuchten Masse verringert, d.h. der Feuchtegehalt der Natriumcyanid-Briketts ist geringer als der Feuchtegehalt der feuchten Masse.

Bevorzugt weisen die erhaltenen Natriumcyanid-Briketts einen Feuchtegehalt von 0,1 bis 8 Massen-%, weiter bevorzugt von 0,1 bis 7 Massen-%, noch weiter bevorzugt von 0,1 bis 6 Massen-%, auf. Der Feuchtegehalt ist der Wassergehalt bezogen auf die Gesamtmasse der Natriumcyanid-Briketts. Es werden Natriumcyanid-Briketts mit guter Festigkeit und chemischer Beständigkeit erhalten.

Ein Natriumcyanid-Brikett mit einem solchen Feuchtegehalt hat den Vorteil, dass im Vergleich zu konventionell getrockneten Natriumcyanid-Briketts deutlich geringere Drücke für die Brikettierung notwendig sind um ausreichend feste und damit marktfähige und staubfreie Natriumcyanid-Briketts zu formen.

Ein erfindungsgemäß hergestelltes Natriumcyanid-Brikett hat den weiteren Vorteil, dass das Natriumcyanid-Brikett schnell in polarem Lösemittel, insbesondere Wasser, wieder gelöst werden kann.

Vorzugsweise ist neben der enthaltenen Feuchte kein Bindemittel in den Natriumcyanid-Briketts enthalten. Es handelt sich somit bevorzugt um bindemittelfreie Briketts.

Bevorzugt liegt der Anteil an Natriumcyanid in den Natriumcyanid-Briketts bei mehr als 86 Massen-% und/oder bei weniger als 99 Massen-%. Insbesondere liegt der Anteil an Natriumcyanid in den Natriumcyanid-Briketts in einem Bereich von 86 Massen-% bis 98,5 Massen-%, bevorzugt von 90 Massen-% bis 98 Massen-%, weiter bevorzugt 93 Massen-% bis 96 Massen-%, bezogen auf die Gesamtmasse des Natriumcyanid-Briketts. Neben Restfeuchtigkeit (Wasser) und Natriumcyanid können in den Natriumcyanid-Briketts gegebenenfalls die vorstehend genannten Verunreinigungen enthalten sein.

Ein besonderer Vorteil des erfindungsgemäßen Verfahrens besteht darin, dass die aus der Suspension abgetrennte feuchte Masse vor der Zuführung in die Brikettiermaschine keiner Trocknung unterworfen werden muss. Unter Trocknung wird ein gesonderter Schritt mittels einer Trocknungsvorrichtung verstanden, in der der Feuchtigkeitsgehalt der abgetrennten feuchten Masse verringert wird, z.B. durch Aufheizen und/oder Anlegen eines Vakuums.

Gemäß dem erfindungsgemäßen Verfahren wird eine Kombination von diskontinuierlich arbeitender Zentrifuge, einem Pufferbehälter zur Zwischenlagerung der feuchten Masse, welcher bevorzugt ein Mischorgan zur Vermeidung von Brückenbildung der feuchten Masse sowie ein geeignetes Austragssystem besitzt, und einer kontinuierlich arbeitenden Brikettiermaschine, insbesondere einer Walzenpresse, welche bevorzugt über eine Zuführungsschnecke zur Vordruckerzeugung, Walzen mit Edelstahlbeschichtung und/oder Edelstahlmatrizen und Presskraftregelung, bevorzugt hydraulischer Presskraftregelung, verfügt, eingesetzt. Durch diese Kombination ist es möglich, Natriumcyanid-Briketts zu erzeugen, die eine besonders gute Festigkeit und chemischer Beständigkeit aufweisen.

Durch die vorstehend beschriebene Kombination ist es ebenfalls besonders gut möglich, aus einer wässrigen Natriumcyanid-Kristalle enthaltenden Suspension, die bevorzugt in einem kontinuierlich oder diskontinuierlich betriebenem evaporativen Kristallisator gebildet wird, eine feuchte Masse enthaltend Natriumcyanid-Kristalle mit der diskontinuierlich arbeitenden Zentrifuge abzutrennen, im Pufferbehälter den diskontinuierlichen Zustrom an feuchtem Natriumcyanid-Kristallen (feuchter Masse) zu egalisieren und kontinuierlich Natriumcyanid-Briketts herzustellen. Dazu kann in der Brikettiermaschine durch die Verpressung, insbesondere hydraulische Verpressung, der Feuchtegehalt der feuchten Masse so reduziert werden, dass die Briketts formstabil bleiben. Die herausgepresste Flüssigkeit entspricht in ihrer Zusammensetzung der bereitgestellten Natriumcyanid-Kristalle enthaltenden wässrigen Suspension. Die Natriumcyanid-Kristalle enthaltende wässrigen Suspension kann durch geeignete Maßnahmen in der Brikettiermaschine aufgefangen und in den Prozess zurückgeführt und weiterverwendet werden.

Die vorliegende Erfindung betrifft ferner eine Vorrichtung zur Herstellung von Natriumcyanid-Briketts nach dem vorstehend beschriebenen erfindungsgemäßen Verfahren, wobei die Vorrichtung umfasst
a) eine diskontinuierlich arbeitende Zentrifuge zur Abtrennung von Natriumcyanid-Kristallen aus einer Natriumcyanid-Kristalle enthaltenden wässrigen Suspension als feuchte Masse,
b) einen Pufferbehälter zur Zwischenlagerung der abgetrennten feuchten Masse und
c) eine kontinuierlich arbeitende Brikettiermaschine zur Verpressung der von dem Pufferbehälter zugeführten feuchten Masse unter Bildung der Natriumcyanid-Briketts.

Die vorstehenden Angaben, Definitionen und bevorzugten Ausführungsformen für das erfindungsgemäße Verfahren gelten entsprechend für die erfindungsgemäße Vorrichtung, insbesondere hinsichtlich des Behälters zur Herstellung der wässrigen Natriumcyanidlösung, des evaporativen Kristallisators, der diskontinuierlich arbeitenden Zentrifuge, des Pufferbehälters und der Brikettiermaschine. Es wird daher darauf verwiesen.

In der erfindungsgemäßen Vorrichtung ist der Pufferbehälter bevorzugt mit einem Mischorgan und mit einem kontinuierlichen Austragssystem versehen.

Die kontinuierlich arbeitende Brikettiermaschine ist bevorzugt eine kontinuierlich arbeitende Walzenpresse.

Die erfindungsgemäße Vorrichtung umfasst ferner vorzugsweise
d) einen Behälter zur Absorption von Cyanwasserstoff in eine wässrige Natriumhydroxidlösung, um eine wässrige Natriumcyanidlösung zu erhalten,
e) einen evaporativen Kristallisator, der beheizbar ist und an den ein Unterdruck angelegt werden kann, zur Kristallisation der erhaltenen wässrigen Natriumcyanidlösung, um die Natriumcyanid-Kristalle enthaltende wässrige Suspension zu erhalten.

## Patentansprüche

1. Verfahren zur Herstellung von Natriumcyanid-Briketts, umfassend
i) Bereitstellen einer Natriumcyanid-Kristalle enthaltenden wässrigen Suspension,
ii) Abtrennen der Natriumcyanid-Kristalle aus der Suspension mittels einer diskontinuierlich arbeitenden Zentrifuge als feuchte Masse,
iii) Zwischenlagern der abgetrennten feuchten Masse in einem Pufferbehälter und
iv) Zuführen der abgetrennten feuchten Masse aus dem Pufferbehälter in eine kontinuierlich arbeitende Brikettiermaschine, in der die feuchte Masse zu den Natriumcyanid-Briketts verpresst wird.

2. Verfahren nach Anspruch 1, **dadurch gekennzeichnet, dass** die Bereitstellung der Natriumcyanid-Kristalle enthaltenden wässrige Suspension umfasst:
ia) einen Absorptionsschritt in Form einer Absorption von Cyanwasserstoff in eine wässrige Natriumhydroxidlösung unter Bildung einer wässrigen Natriumcyanidlösung, wobei der Cyanwasserstoff bevorzugt in Form von flüssigem Cyanwasserstoff, gasförmigem Cyanwasserstoff oder einem Cyanwasserstoff enthaltenden Gas absorbiert wird, und
ib) einen Kristallisationsschritt in Form des Einbringens der wässrigen Natriumcyanidlösung in einen evaporativen Kristallisator, der beheizt wird und in dem ein Unterdruck vorliegt.

3. Verfahren nach Anspruch 2, **dadurch gekennzeichnet, dass** der evaporative Kristallisator so beheizt wird, dass an der Kontaktfläche des Heizelementes zu der Alkalimetallcyanidlösung eine Temperatur von etwa 60 bis 100 °C, vorzugsweise etwa 70 bis 90°C, vorliegt und ein Druck von etwa 30 bis 100 mbar, vorzugsweise etwa 30 bis 70 mbar, vorliegt.

4. Verfahren nach einem der vorhergehenden Ansprüche, **dadurch gekennzeichnet, dass** die diskontinuierlich arbeitende Zentrifuge eine Schälzentrifuge, bevorzugt eine horizontale oder eine vertikale Schälzentrifuge, ist.

5. Verfahren nach einem der vorhergehenden Ansprüche, **dadurch gekennzeichnet, dass** die der kontinuierlich arbeitenden Brikettiermaschine zugeführte feuchte Masse mit den abgetrennten Natriumcyanid-Kristallen einen Feuchtegehalt von 2,5 bis 20 Massen-%, bezogen auf das Gesamtgewicht der feuchten Masse, aufweist.

6. Verfahren nach einem der vorhergehenden Ansprüche, **dadurch gekennzeichnet, dass** die kontinuierlich arbeitende Brikettiermaschine eine Walzenpresse ist.

7. Verfahren nach Anspruch 6, **dadurch gekennzeichnet, dass** die Walzenpresse eine Zuführungsschnecke zur Vordruckerzeugung, Walzen, bevorzugt zwei Walzen, und eine Presskraftregelung aufweist.

8. Verfahren nach einem der vorhergehenden Ansprüche, **dadurch gekennzeichnet, dass** die Walzen auf der Oberfläche eine Matrizenform aufweisen, wobei die Matrizenform bevorzugt eine Edelstahlmatrize ist.

9. Verfahren nach Anspruch 7 oder 8, **dadurch gekennzeichnet, dass** die Presskraftregelung als hydraulische Presskraftregelung ausgestaltet ist, und/oder die Walzen und/oder die Matrizenform eine harte Oberfläche aufweisen.

10. Verfahren nach Anspruch 7 bis 9, **dadurch gekennzeichnet, dass** die Walzen Stahlwalzen oder Stahlgusswalzen sind.

11. Verfahren nach einem der Ansprüche 7 bis 10, **dadurch gekennzeichnet, dass** die kontinuierlich arbeitende Brikettiermaschine eine Walzenpresse ist, die eine Zuführungsschnecke zur Vordruckerzeugung, Stahlwalzen oder Stahlgusswalzen mit einer Edelstahlbeschichtung und/oder einer Edelstahlmatrize auf der Oberfläche und eine hydraulische Presskraftregelung aufweist.

12. Verfahren nach einem der vorhergehenden Ansprüche, **dadurch gekennzeichnet, dass** die feuchte Masse in der Brikettiermaschine bei einer Temperatur im Bereich von 50 bis 100°C, bevorzugt 60 bis 80°C, verpresst wird, und/oder die feuchte Masse mit einem Pressdruck von 10.000 bis 50.000 kN/m², bevorzugt 19.000 bis 23.000 kN/m², verpresst wird.

13. Verfahren nach einem der vorhergehenden Ansprüche, **dadurch gekennzeichnet, dass** die mittels der diskontinuierlich arbeitenden Zentrifuge abgetrennte feuchte Masse in dem Pufferbehälter zwischengelagert und von dort der kontinuierlich arbeitenden Brikettiermaschine kontinuierlich zugeführt wird.

14. Verfahren nach einem der vorhergehenden Ansprüche, **dadurch gekennzeichnet, dass** der Pufferbehälter mit einem Mischorgan und mit einem kontinuierlichen Austragssystem versehen ist.

15. Verfahren nach einem der vorhergehenden Ansprüche, **dadurch gekennzeichnet, dass** die abgetrennte feuchte Masse der kontinuierlich arbeitenden Brikettiermaschine ohne vorherige Trocknung zugeführt wird.

16. Vorrichtung zur Herstellung von Natriumcyanid-Briketts nach einem Verfahren gemäß einem der Ansprüche 1 bis 15, umfassend
a) eine diskontinuierlich arbeitende Zentrifuge zur Abtrennung von Natriumcyanid-Kristallen aus einer Natriumcyanid-Kristalle enthaltenden wässrigen Suspension als feuchte Masse,
b) einen Pufferbehälter zur Zwischenlagerung der abgetrennten feuchten Masse,
c) eine kontinuierlich arbeitende Brikettiermaschine zur Verpressung der von dem Pufferbehälter zugeführten feuchten Masse unter Bildung der Natriumcyanid-Briketts.

17. Vorrichtung nach Anspruch 16, **dadurch gekennzeichnet, dass** der Pufferbehälter mit einem Mischorgan und mit einem kontinuierlichen Austragssystem versehen ist, und/oder die kontinuierlich arbeitende Brikettiermaschine eine Walzenpresse ist.

18. Vorrichtung nach Anspruch 16 oder Anspruch 17, **dadurch gekennzeichnet, dass** sie ferner umfasst
d) einen Behälter zur Absorption von Cyanwasserstoff in eine wässrige Natriumhydroxidlösung, um eine wässrige Natriumcyanidlösung zu erhalten,
e) einen evaporativen Kristallisator, der beheizbar ist und in dem ein Unterdruck angelegt werden kann, zur Kristallisation der erhaltenen wässrigen Natriumcyanidlösung, um die Natriumcyanid-Kristalle enthaltende wässrige Suspension zu erhalten.
